Europäisches Patentamt

(19) European Patent Office

Office européen des brevets

(11) Publication number: **0 048 126**
**B1**

(12) **EUROPEAN PATENT SPECIFICATION**

(45) Date of publication of patent specification: **26.03.86**

(21) Application number: **81304108.4**

(22) Date of filing: **08.09.81**

(51) Int. Cl.⁴: **H 02 G 1/10**

(54) **Gas insulated bus with cooling means.**

(30) Priority: **11.09.80 JP 126318/80**

(43) Date of publication of application:
**24.03.82 Bulletin 82/12**

(45) Publication of the grant of the patent:
**26.03.86 Bulletin 86/13**

(84) Designated Contracting States:
**CH DE FR LI**

(56) References cited:
**US-A-2 878 300**
**US-A-3 230 293**

(73) Proprietor: **Kabushiki Kaisha Toshiba**
**72, Horikawa-cho Saiwai-ku**
**Kawasaki-shi Kanagawa-ken 210 (JP)**

(72) Inventor: **Haginomori, Eiichi**
**Tokyo Shibaura Denki K. K. 72, Horikawa-cho**
**Saiwai-ku Kawasaki-shi Kanagawa-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

This invention relates to a gas insulated electrical bus. Such a bus comprises a metal sheath having one or more electrical conductors therein and a filling of an insulating gas such as sulphur hexafluoride ($SF_6$).

It is known from U.S. 3230293 (Turgeon) to have a force cooled isolated bus system using internal forcing means, such as a fan or blower. A hollow electrical conductor is mounted within a sheath and cooling gas is force circulated by a fan or blower in the hollow conductor. At a cooling point, the sheath extends upwards to a heat radiator, and the conductor extends upwards inside the sheath into the radiator. The cooling gas is forced upwards inside the sheath to the radiator, and then into an opening at the top of the upward extension of the hollow conductor. The gas is then pulled downwards through the hollow conductor by the blower or fan.

It is an object of the present invention to increase the cooling of the or each conductor so that the current carried by the or each conductor can be increased without increasing the physical size of the conductor.

According to the present invention, a gas insulated electrical bus comprises at least one hollow conductor located in a metal sheath which together extend substantially horizontally and contain a filling of insulating gas, the interior of the conductor being in communication with the interior of the sheath and being connected by way of a tube which extends upwardly from the conductor to cooling means positioned outside the sheath and in communication with the interior of the sheath, characterised in that the gas is transported from the conductor via the tube to the cooling means and back to the conductor via the sheath by convection only without the use of any internal forcing means.

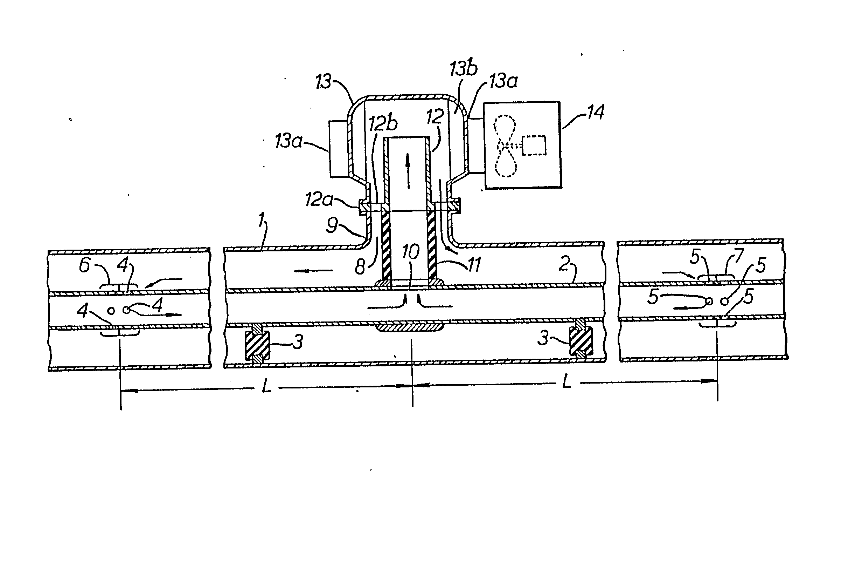

In order that the invention may be more readily understood, it will now be described, by way of example only, with reference to the accompanying drawing which is an axial cross section of a gas insulated electrical bus in accordance with the present invention.

A generally cylindrical metal sheath 1 is mounted substantially horizontal and, in use, is held at ground potential. A hollow electrical conductor 2 is located in the sheath and is supported in spaced apart relation relative to the sheath by insulating spacers 3 positioned at intervals along the length of the conductor. A filling of insulating gas such as sulphur hexafluoride is contained within the sheath. At intervals along the length of the conductor 2 clusters of openings 4, 5 are provided which serve to connect the interior of the conductor with the interior of the sheath. Shields 6, 7 are fitted around the conductor in the vicinity of the openings 4, 5, and overlie the openings but do not close them off.

Between each pair of adjacent clusters of openings, conveniently mid-way between them, an opening 8 is provided on the upper surface of the sheath 1. The opening leads to a short hollow cylindrical portion 9 projecting from the sheath and having a flanged outer end. At positions corresponding to the openings 8 on the sheath, gas outlets 10 are provided on the upper surface of the conductor 2. At each gas outlet 10, an insulating tube 11 is sealed at one end to the conductor to surround the outlet and the other end of the tube is flush with the upper end of the cylindrical portion 9 projecting from the sheath. A metal cylindrical tube 12 having a flange 12a is mounted with its flange on the flanged end of the portion 9 and the tube 12 is connected to, and forms an extension of, the tube 11. As a result, the conductor 2 is additionally supported from the sheath by means of the cylinders 11 and 12 which are secured to the cylindrical portion 9. Holes 12b are provided in the flange of the cylinder 12.

A metal casing 13 is closed except for a flange which is sealingly secured to the flange 12a and the casing encloses the upper end of the cylinder 12. A plurality of cooling fins 13a and 13b are secured to the outside and inside of the casing respectively. A cooling fan unit 14 is attached to the outside of the casing and, in use, forces air onto the casing.

In use, the sheath is grounded and current flows through the conductor 2. As a result the gas within the conductor 2 becomes heated and its density is lowered. On the other hand, the gas within the casing 13 is cooled to a relatively low temperature compared with that in the conductor 2 and so the hot gas within the conductor rises through the tubes 11 and 12 into the casing 13 and the gas from the casing flows through the openings 12b into the sheath and through the openings 4, 5 back into the conductor.

This natural circulation of the gas is in the directions indicated by the arrows in the figure.

As a specific example, the following information is provided:—

Conductor 2 is of aluminium alloy with an inner diameter of 130 mm and an outer diameter of 150 mm. The outlets 10 are positioned a distance L from the adjacent openings 4, 5, and L equals 10 metres.

Assuming that the maximum permitted temperature rise of the conductor is 50°C, then for natural cooling without the cooling means of the present invention the maximum current in the conductor is about 500 amps. With such a current flowing the heat generated at conductor 2 is about 230 W/m. If the current is increased to 800 amps then the amount of heat generated in ten metres of the conductor is 5900 W. $230 \times 10$ W = 2300 W can be dissipated naturally from the conductor by way of the gas and the sheath 1 so, if the current is to be raised from 500 to 800 amps, 5900—2300 W = 3600 W must be dissipated from every 10 metre length of the conductor by means in accordance with the invention.

If it is assumed that heat capacity of gas pressurised at three [$Kg/cm^2$] is 19 [Joul/1.°C] where 1 means unit litre, and temperature difference between that of the gas inlet holes 4 and 5 and the gas outlet 10 is about twenty (20) degree (C), the remaining heat can be cooled by providing an amount of gas flow equal to 9.5 [1/sec.]. It is assumed that sufficient thermal conductivity between the inside of conductor 2 and the gas therein can be obtained by generation of irregular gas flow within the conductor 2.

In order to obtain sufficient thermal conductivity, it is, for instance, effective that the area of the inner surface of the conductor 2 is increased by forming groove or the like in the inner surface of the conductor.

Meanwhile, gas flow within conductor 2 has a rate of 0.71 [m/sec] because of the inner cross section of 133 [cm$^2$] of conductor 2 and the gas head loss generated at distance L when SF$_6$ gas flow becomes about 0.04 [m].

If it is assumed that the height of the series connection of insulating cylinder 11 and metallic cylinder 12 is one metre and the temperature of the gas is 300 degree [K], temperature difference $\Delta t[c]$ can be obtained by computing from equation ($\Delta[°C]/300[°K] \times 1[m] = 0.04[m]$), that is $\Delta t$ equals 12 degree [C].

Namely if there is a temperature difference of 12 degree [C] between opposite ends of the vertical series connection of the two cylinders, a desired gas flow as described above can be accomplished.

It should be understood that obtaining such a temperature difference is easily achieved by providing the cooled casing 13. Under some circumstances it is possible to generate a greater temperature difference.

Hence according to the present invention, it is possible to increase the electric current capacity of conductor 2 by sixty percent and more compared with that of the conventional natural cooling without increasing the dimensions of the conductor.

Although the invention has been explained by way of example with the employment of a single cylindrical conductor which is mounted within the sheath, it should be apparent that if desired a plurality of conductors, for example three conductors acting as a three-phase power line could be mounted in a sheath and with each conductor having its own connections to separate cooled casings positioned outside of the sheath.

Moreover, instead of employing a cooling fan unit 14, if desired a water cooler or other conventional cooler could be utilized.

**Claims**

1. A gas insulated electrical bus comprising at least one hollow conductor (2) located in a metal sheath (1) which together extend substantially horizontally and contain a filling of insulating gas, the interior of the conductor being in communication with the interior of the sheath and being connected by way of a tube (11, 12) which extends upwardly from the conductor to cooling means (13) positioned outside the sheath and in communication with the interior of the sheath, characterised in that the gas is transported from the conductor via the tube to the cooling means and back to the conductor via the sheath by convection only without the use of any internal forcing means.

2. A gas insulated electrical bus as claimed in claim 1, characterised in that a plurality of said tubes (11, 12) are spaced apart along the length of the conductor (2) and are connected to separate cooling means (13), and the interior of the conductor is in communication with the interior of the sheath at positions (4, 5) located between the tubes.

3. A gas insulated electrical bus as claimed in claim 1 or 2, characterised in that each cooling means comprises a hollow casing (13) into which the tube (11, 12) extends and the casing is in communication with the interior of the sheath (1) through a passage (12b) surrounding the tube (11, 12).

4. A gas insulated electrical bus as claimed in claim 3, characterised in that an electrical fan serves to blow air over the outside of the casing.

5. A gas insulated electrical bus as claimed in claim 4, characterised in that cooling fins (13a, 13b) are provided on the inside and/or the outside of the casing.

**Revendications**

1. Barre omnibus électrique isolée au gaz, comprenant au moins un conducteur creux (2) placé dans une gaine métallique (1) qui s'étendent ensemble substantiellement horizontalement et contiennent un remplissage de gaz isolant, l'intérieur du conducteur étant en communication avec l'intérieur de la gaine et étant connecté au moyen d'un tube (11, 12) s'étend vers le haut, à partir du conducteur, en direction d'un moyen de refroidissement (13) disposé à l'extérieur de la gaine, et en communication avec l'intérieur de la gaine, caractérisée en ce que le gaz est transporté à partir du conducteur, à travers le tube, vers le moyen de refroidissement et, en retour, vers le conducteur, à travers la gaine, par convection seulement, sans utilisation de moyen interne de mise en circulation forcée.

2. Barre omnibus électrique isolée au gaz, comme revendiqué dans la revendication 1, caractérisée en ce qu'une pluralité de dits tubes (11, 12) sont disposés, avec un intervalle entre eux, le long du conducteur (2) et sont connectés à des moyens de refroidissement (13) séparés, et en ce que l'intérieur du conducteur est en communication avec l'intérieur de la gaine en des emplacements (4, 5) situés entre les tubes.

3. Barre omnibus électrique isolée au gaz, comme revendiqué dans la revendication 1 ou 2, caractérisée en ce que chaque moyen de refroidissement comprend un carter creux (13), dans lequel s'étend le tube (11, 12), et que le carter est en communication avec l'intérieur de la gaine (1) à travers un passage (12b) entourant le tube (11, 12).

4. Barre omnibus électrique isolée au gaz, comme revendiqué dans la revendication 3, caractérisée en ce qu'un ventilateur électrique sert à souffler de l'air sur la partie extérieure du carter.

5. Barre omnibus électrique isolée au gaz, comme revendiqué dans la revendication 4, caractérisée en ce que la partie intérieure et/ou la partie extérieure du carter sont munies d'ailettes de refroidissement (13a, 13b).

## Patentansprüche

1. Gasisolierte elektrische Schiene, mit wenigstens einem hohlen Leiter (2), der in einem metallenen Mantel (1) angeordnet ist, welche sich zusammen im wesentlichen horizontal erstrecken und eine Füllung aus isolierendem Gas enthalten, wobei das innere des Leiters mit dem inneren des Mantels in Verbindung steht und durch ein Rohr (11, 12) verbunden ist, das sich von dem Leiter nach oben zu Kühlmitteln (13) erstreckt, die außerhalb des Mantels angeordnet sind und mit dem Inneren des Mantels in Verbindung stehen, dadurch gekennzeichnet, daß das Gas von dem Leiter über das Rohr zu den Kühlmitteln und zurück zu dem Leiter über den Mantel nur durch Konvektion ohne Verwendung irgendwelcher inneren Druckmittel transportiert wird.

2. Gasisolierte elektrische Schiene nach Anspruch 1, dadurch gekennzeichnet, daß mehrere der genannten Rohre (11, 12) im Abstand voneinander über die Länge des Leiters (2) angeordnet und mit getrennten Kühlmitteln (13) verbunden sind, und daß das Innere des Leiters mit dem Äußeren des Mantels an Positionen (4, 5) in Verbindung steht, die zwischen den Rohren liegen.

3. Gasisolierte elektrische Schiene nach Anspruch 1 oder 2, dadurch gekennzeichnet, daß jedes Kühlmittel ein hohles Gehäuse (13) aufweist, in das sich das Rohr (11, 12) erstreckt und das mit dem Inneren des Mantels (1) über einen Durchlaß (12b) in Verbindung steht, der das Rohr (11, 12) umgibt.

4. Gasisolierte elektrische Schiene nach Anspruch 3, dadurch gekennzeichnet, daß ein elektrisches Gebläse vorgesehen ist, das Luft über die Außenseite des Gehäuses bläst.

5. Gasisolierte elektrische Schiene nach Anspruch 4, dadurch gekennzeichnet, daß Kühlflossen (13a, 13b) auf der Innenseite und/oder Außenseite des Gehäuses angeordnet sind.